(19) Europäisches Patentamt / European Patent Office / Office européen des brevets

(11) **EP 4 693 461 A1**

(12) **EUROPEAN PATENT APPLICATION**
published in accordance with Art. 153(4) EPC

(43) Date of publication:
**11.02.2026 Bulletin 2026/07**

(21) Application number: 23930922.2

(22) Date of filing: **15.12.2023**

(51) International Patent Classification (IPC):
$H01M\ 4/36$ (2006.01)    $H01M\ 4/13$ (2010.01)
$H01M\ 4/48$ (2010.01)    $H01M\ 4/62$ (2006.01)
$H01M\ 4/587$ (2010.01)

(52) Cooperative Patent Classification (CPC):
H01M 4/13; H01M 4/36; H01M 4/48; H01M 4/587;
H01M 4/62; Y02E 60/10

(86) International application number:
**PCT/JP2023/044966**

(87) International publication number:
**WO 2024/202302 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.03.2023 JP 2023052996**

(71) Applicant: AESC Japan Ltd.
**Yokohama-Shi, Kanagawa 220-0012 (JP)**

(72) Inventors:
• **AKAGAWA, Kazuhiro**
  **Zama-shi, Kanagawa 252-0012 (JP)**
• **LU, Chiaying**
  **Zama-shi, Kanagawa 252-0012 (JP)**
• **SHIMOJI, Risa**
  **Zama-shi, Kanagawa 252-0012 (JP)**

(74) Representative: **Becker, Eberhard**
  **Becker Kurig & Partner**
  **Patentanwälte mbB**
  **Bavariastraße 7**
  **80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY USING SAME**

(57)    An objective of the present invention is to suppress the expansion and contraction of a negative electrode active material layer when charging and discharging a nonaqueous electrolyte secondary battery, including lithium ion secondary batteries, when an Si-based negative electrode active material is used, to improve the lifespan (cycle characteristics) of the nonaqueous electrolyte secondary battery, and to improve rapid charging properties. The negative electrode active material contains: a silicon-based active material (A) containing $SiO_x$ (in the formula, x is a number satisfying $0.5 \leq x \leq 1.6$); a carbon-based active material (B) composed of secondary particles formed by aggregating the primary particles; and a carbon-based active material (C) composed of primary particles that do not form the secondary particles. $D10_A$ is 3 μm or more, and if the maximum value of D10 among values of $D10_A$, $D10_B$, and $D10_C$ is defined as $D10_{max}$, and the minimum value is defined as $D10_{min}$, the value of $D10_{max}/D10_{min}$ is 2.5 or less. If the maximum value of D90 among values of $D90_A$, $D90_B$, and $D90c$ is defined as $D90_{max}$, and the minimum value is defined as $D90_{min}$, the value of $D90_{max}/D90_{min}$ is 2.0 or less.

EP 4 693 461 A1

**Description**

Technical Field

The present invention relates to a negative electrode for a nonaqueous electrolyte secondary battery, and a nonaqueous electrolyte secondary battery using the negative electrode for a nonaqueous electrolyte secondary battery.

Related Art

Nonaqueous electrolyte secondary batteries have been put to practical use as batteries for automobiles including hybrid vehicles and electric vehicles or the like, and have also been used as batteries for small electronic devices including mobile terminals or the like. As such batteries, lithium ion secondary batteries are particularly widely used. Lithium ion secondary batteries are required to have various characteristics such as output characteristics, energy density, capacity, lifespan, and high-temperature stability. Particularly, it has become an urgent issue to increase the volumetric energy density and capacity of the batteries in order to reduce the size of the batteries. Particularly, the lithium ion secondary batteries for electric vehicles are required to be increased in energy density in order to further increase a cruising distance. Hence, various improvements have been made to battery configurations including electrodes and electrolytes.

It is known to use graphite as a negative electrode active material for a lithium ion secondary battery. Graphite is widely popular for its low cost, little deterioration due to charge and discharge cycles of batteries, and high safety. However, in a conventional lithium ion secondary battery using a graphite material as a negative electrode active material, since further improvement in energy density is difficult to expect, exploration of negative electrode active materials having even higher capacity has been conducted. As a high-capacity negative electrode active material, a silicon-based negative electrode active material (hereinafter sometimes referred to as "Si-based negative electrode active material" or the like) including silicon or silicon oxide is attracting attention.

For example, Patent Document 1 discloses a negative electrode that defines a ratio of cumulative particle size D90 to cumulative particle size D10 of carbonaceous particles and the whole silicon oxide particles in order to provide a nonaqueous secondary battery excellent in charge and discharge efficiency.

Prior Art Documents

Patent Documents

Patent Document 1: WO 2018/097212

SUMMARY OF INVENTION

Technical Problem

In Patent Document 1, it is disclosed that an average particle size (50% cumulative particle size from the smaller particle side) (d50) is 3 $\mu$m or more and 30 $\mu$m or less, the 10% cumulative particle size from the smaller particle side (d10) is 0.1 $\mu$m or more and 10 $\mu$m or less, a ratio (R1=d90/d10) of the 90% cumulative particle size from the smaller particle side (d90) to d10 is 3 or more and 20 or less, and a ratio (R2=d50/d10) of d50 to d10 is 1.7 or more and 5 or less. However, under these conditions, it is not sufficient to suppress the loss of contact between active material particles due to repeated expansion and contraction of the negative electrode during charge and discharge of the lithium ion secondary battery.

The present invention aims to suppress expansion and contraction of a negative electrode active material layer during charge and discharge of a nonaqueous electrolyte secondary battery including a lithium ion secondary battery in the case of using a Si-based negative electrode active material, and to improve the lifespan (cycle characteristics) of a nonaqueous electrolyte secondary battery.

Solution to Problem

One embodiment of the present invention provides a negative electrode for a nonaqueous electrolyte secondary battery that includes a negative electrode active material layer, the negative electrode active material layer including a negative electrode active material, a binder, and a conductive assistant. The negative electrode active material is characterized by including: a silicon-based active material (A), containing $SiO_x$ (where x is a number satisfying $0.5 \leq x \leq 1.6$); a carbon-based active material (B), composed of secondary particles formed by aggregation of primary particles; and a carbon-based active material (C), composed of primary particles that do not form secondary particles. In a volume-based cumulative particle size distribution of particles of the negative electrode active material, in a case where a particle size when a cumulative particle volume from a small particle size side reaches x [%] of a total particle volume is expressed as Dx [μm], $D10_A$ of the silicon-based active material (A) is 3 μm or more; among values of $D10_A$ of the silicon-based active material (A), $D10_B$ of the carbon-based active material (B), and $D10_C$ of the carbon-based active material (C), when the maximum value of D10 is defined as $D10_{max}$ and the minimum value of D10 is defined as $D10_{min}$, a value of $D10_{max}/D10_{min}$ is 2.5 or less; and among values of $D90_A$ of the silicon-based active material (A), $D90_B$ of the carbon-based active material (B), and $D90_C$ of the carbon-based active material (C), when the maximum value of D90 is defined as $D90_{max}$ and the minimum value of D90 is defined as $D90_{min}$, a value of $D90_{max}/D90_{min}$ is 2.0 or less.

Effects of Invention

While the negative electrode for a nonaqueous electrolyte secondary battery of the present invention uses a Si-based negative electrode active material, there can be provided a negative electrode for a nonaqueous electrolyte secondary battery in which expansion and contraction are suppressed and which excels in rapid charge and discharge, as well as a nonaqueous electrolyte secondary battery using the negative electrode.

DESCRIPTION OF THE EMBODIMENTS

Embodiments of the present invention are described below. One embodiment provides a negative electrode for a nonaqueous electrolyte secondary battery that includes a negative electrode active material layer, the negative electrode active material layer including a negative electrode active material, a binder, and a conductive assistant. The negative electrode active material is characterized by including: a silicon-based active material (A), containing $SiO_x$ (where x is a number satisfying $0.5 \leq x \leq 1.6$); a carbon-based active material (B), composed of secondary particles formed by aggregation of primary particles; and a carbon-based active material (C), composed of primary particles that do not form secondary particles. In a volume-based cumulative particle size distribution of particles of the negative electrode active material, in a case where a particle size when a cumulative particle volume from a small particle size side reaches x [%] of a total particle volume is expressed as Dx [μm], $D10_A$ of the silicon-based active material (A) is 3 μm or more; among values of $D10_A$ of the silicon-based active material (A), $D10_B$ of the carbon-based active material (B), and $D10_C$ of the carbon-based active material (C), when the maximum value of D10 is defined as $D10_{max}$ and the minimum value of D10 is defined as $D10_{min}$, a value of $D10_{max}/D10_{min}$ is 2.5 or less; and among values of $D90_A$ of the silicon-based active material (A), $D90_B$ of the carbon-based active material (B), and $D90_C$ of the carbon-based active material (C), when the maximum value of D90 is defined as $D90_{max}$ and the minimum value of D90 is defined as $D90_{min}$, a value of $D90_{max}/D90_{min}$ is 2.0 or less.

In an embodiment, the nonaqueous electrolyte secondary battery refers to a battery that mainly uses an organic solvent-based electrolyte and is capable of undergoing repeated charge and discharge. Examples of the nonaqueous electrolyte secondary battery include a lithium ion secondary battery. The nonaqueous electrolyte secondary battery includes, as a constituent member thereof, a negative electrode for a nonaqueous electrolyte secondary battery. In an embodiment, the negative electrode refers to a battery member of a thin plate shape or sheet shape in which a mixture including a negative electrode active material is applied or rolled and dried on a negative electrode current collector being a metal foil such as copper foil and a negative electrode active material layer is formed. That is, the negative electrode is composed of the negative electrode current collector, and the negative electrode active material layer including the negative electrode active material applied on both sides of the negative electrode current collector. In an embodiment, the negative electrode active material layer preferably includes a negative electrode active material, a binder, and a conductive assistant. The negative electrode active material refers to a substance used in the negative electrode among substances involved in reactions that generate electrical energy. The binder generally refers to a substance for binding negative electrode active material particles in order to bring negative electrode active materials in particle form into electrical contact with each other. The conductive assistant is a material for reducing the resistance of an electrode.

In an embodiment, the negative electrode active material includes a silicon-based active material (A) containing $SiO_x$ (where x is a number satisfying $0.5 \leq x \leq 1.6$), and a carbon-based active material. Here, the silicon-based active material (A) is a silicon oxide having the chemical formula $SiO_x$, where x in the formula is a number satisfying $0.5 \leq x \leq 1.6$. The silicon-based active material (A) may be a single compound or a mixture of multiple compounds. The silicon-based active material is preferably in the form of particles having a substantially uniform size or a nonuniform size. The negative electrode active material may further contain a lithium silicon compound. The lithium silicon compound is a compound containing a lithium element and a silicon element, such as those represented by chemical formulas $Li_{4.4}Si$, $Li_{3.75}Si$, and $Li_4SiO_4$ (lithium silicate). The lithium silicon compound is a stable compound and does not release lithium during charge and discharge of the nonaqueous electrolyte secondary battery. Accordingly, by use in combination with a silicon-based active material that is likely to cause a volume change during charge and discharge of the nonaqueous electrolyte secondary battery, a volume change of the negative electrode active material layer can be suppressed. Furthermore, the silicon-based active material (A) may be doped with lithium in advance. In the case of the presence of the lithium silicon compound or silicon doped with lithium, a particle size of the silicon-based active material (A) refers to an overall particle size of these silicon-containing compounds and the like, unless otherwise specified.

In the present specification, in the volume-based cumulative particle size distribution of particles of the negative electrode active material, the particle size when the cumulative particle volume from the small particle size side reaches x [%] of the total particle volume is expressed as Dx [μm]. It is preferable that $D10_A$ of the silicon-based active material (A) be 3 μm or more. It is preferable that $D50_A$ of the silicon-based active material (A) be 7 μm or more and 13 μm. Furthermore, the silicon-based active material may be doped with lithium in advance. Here, $D50_A$ refers to an average particle size of the silicon-based active material (A).

The negative electrode active material further contains a carbon-based active material. It is preferable that the carbon-based active material be natural graphite, artificial graphite, hard carbon, soft carbon, or any mixture thereof. Here, graphite refers to a hexagonal plate-like crystal of a hexagonal system, and is sometimes called black lead, plumbago, or the like. Natural graphite and artificial graphite include natural graphite having a coating of amorphous carbon and artificial graphite having a coating of amorphous carbon. Here, amorphous carbon refers to a carbon material that may have a structure partially similar to that of graphite, has a structure in which microcrystals are randomly networked, and is amorphous as a whole. Examples of the amorphous carbon include carbon black, coke, activated carbon, carbon fiber, hard carbon, soft carbon, and mesoporous carbon. In the case of using artificial graphite, it is preferable that an interlayer distance d value ($d_{002}$) be 0.33 nm or more. Artificial graphite generally has a crystal structure thinner than that of natural graphite. In the case of using artificial graphite as a negative electrode active material for a nonaqueous electrolyte secondary battery, particularly a lithium ion secondary battery, it is necessary to provide an interlayer distance that allows insertion of lithium ions. The interlayer distance that allows insertion and extraction of lithium ions can be estimated by the d value ($d_{002}$); if the d value is 0.33 nm or more, insertion and extraction of lithium ions can be performed without problems. In an embodiment, it is preferable that at least two types of carbon-based active materials be contained. The two types of carbon-based active materials are called carbon-based active material (B) and carbon-based active material (C), respectively. The carbon-based active material (B) is preferably a carbon-based active material composed of secondary particles formed by aggregation of primary particles. The carbon-based active material (B) is preferably artificial graphite whose surface is coated with amorphous carbon. The carbon-based active material (C) is a primary particle different from the primary particles of the carbon-based active material (B), and is a carbon-based active material in which primary particles do not aggregate and do not form secondary particles. The carbon-based active material (C) is preferably artificial graphite whose surface is not coated.

With respect to a total amount of the negative electrode active material in the negative electrode active material layer, the content of the silicon-based active material is particularly preferably more than 5% by mass and less than 50% by mass. More preferably, the content of the silicon-based active material is more than 10% by mass and less than 20% by mass. If the content of the silicon-based active material is excessively large, the volume change of the negative electrode active material during charge and discharge of the nonaqueous electrolyte secondary battery may become increasingly large, which is not favorable. If the content of the silicon-based active material is excessively small, the effect of achieving high energy density is less likely to be obtained.

In the present embodiment, among the values of $D10_A$ of the silicon-based active material (A), $D10_B$ of the carbon-based active material (B), and $D10_C$ of the carbon-based active material (C), when the maximum value of D10 is $D10_{max}$ and the minimum value of D10 is $D10_{min}$, it is preferable that the value of $D10_{max}/D10_{min}$ be 2.5 or less.

Furthermore, among the values of $D90_A$ of the silicon-based active material (A), $D90_B$ of the carbon-based active material (B), and $D90_C$ of the carbon-based active material (C), if the maximum value of D90 is $D90_{max}$ and the minimum value of D90 is $D90_{min}$, it is preferable that the value of $D90_{max}/D90_{min}$ be 2.0 or less. By using a combination of negative electrode active materials having such particle size distributions, the packing density of the negative electrode active material particles can be optimized, and expansion and contraction of the negative electrode active material layer in association with charge and discharge can be suppressed.

Regarding the blending of the negative electrode active material, with respect to the total amount of the negative electrode active material in the negative electrode active material layer, the content of the silicon-based active material (A) is particularly preferably more than 5% by mass and less than 50% by mass. More preferably, the content of the silicon-based active material (A) is more than 10% by mass and less than 20% by mass. If the content of the silicon-based active material (A) is excessively large, the volume change of the negative electrode active material during charge and discharge of the nonaqueous electrolyte secondary battery may become increasingly large, which is not favorable. If the content of the silicon-based active material (A) is excessively small, the effect of achieving high energy density is less likely to be obtained.

In the above negative electrode active material, good electrical contact can be achieved by binding particles together with the binder. The binder preferably contains poly(meth)acrylic acid, a metal salt of poly(meth)acrylic acid, an alkyl ester of poly(meth)acrylic acid, or any mixture thereof. Examples of a compound suitable as the binder include: polyacrylic acid, polymethacrylic acid; sodium polyacrylate, potassium polyacrylate, sodium polymethacrylate, potassium polymethacrylate; and polyethyl acrylate, polyethyl acrylate, polybutyl acrylate, polymethyl methacrylate, polyethyl methacrylate, polybutyl methacrylate, and may also include any mixture of the foregoing. The content of the binder is preferably 2% by mass or more and less than 10% by mass with respect to a total solid content of the negative electrode active material layer. If the content of the binder is excessively large, since portions where a surface of the active material is covered by the binder increase, there is a risk that ion conductivity or electron conductivity may decrease. If the content of the binder is excessively small, there is a risk that electrical contact between negative electrode active material particles may not be suitably performed.

It is particularly preferable that carboxymethyl cellulose (referred to as "CMC") being a derivative of cellulose, or a metal salt of carboxymethyl cellulose (for example, sodium carboxymethyl cellulose or potassium carboxymethyl cellulose), be further contained as a component of the binder, in addition to the above compound. Carboxymethyl cellulose or the metal salt of carboxymethyl cellulose serves to stabilize the above binder compound and also stabilizes the electrical contact of the negative electrode active material. In the case of further adding CMC or the metal salt of CMC as a component of the binder, the content of CMC or the metal salt of CMC is preferably 0.05% by mass or more and 1.5% by mass or less, particularly preferably 0.08% by mass or more and 0.8% by mass or less, and further preferably 0.15% by mass or more and 0.30% by mass or less, with respect to the total solid content of the negative electrode active material layer.

In an embodiment, it is preferable that the content of the silicon-based active material (A) be 5% by mass or more and 50% by mass or less with respect to the total solid content of the negative electrode active material layer, and that the content of the binder be 2% by mass or more and 8% by mass or less with respect to the total solid content of the negative electrode active material layer.

It is further preferable that the content of the silicon-based active material (A) be 10% by mass or more and 20% by mass or less with respect to the total solid content of the negative electrode active material layer, and that the content of the binder be 2% by mass or more and 6% by mass or less with respect to the total solid content of the negative electrode active material layer.

It is even more preferable that the content of the silicon-based active material (A) be 15% by mass or more and 20% by mass or less with respect to the total solid content of the negative electrode active material layer, and that the content of the binder be 2.5% by mass or more and 3.8% by mass or less with respect to the total solid content of the negative electrode active material layer.

By suitably adjusting the contents of the silicon-based active material (A) and the binder, the energy density of the nonaqueous electrolyte secondary battery can be improved.

The negative electrode active material layer preferably further includes a conductive assistant. The conductive assistant is a material for reducing the resistance of an electrode. Examples of the conductive assistant include: carbon fiber, such as carbon nanofiber; carbon black, such as acetylene black and Ketjen black; and a carbon material, such as activated carbon, graphite, mesoporous carbon, fullerenes, and a carbon nanotube. In an embodiment, it is particularly preferable to use a carbon nanotube (referred to as "CNT") as the conductive assistant. A CNT is a substance in which a six-membered ring network (graphene) of carbon atoms has a single-layer or multilayer coaxial tube structure. There are single-walled carbon nanotubes (single-layer; referred to as "SWCNTs") and multi-walled carbon nanotubes (multilayer; referred to as "MWCNTs"). Either CNT may be used. However, it is preferable to use a bundled SWCNT in which SWCNTs are aggregated and which has a shape having larger diameter and length than a single SWCNT, so that a conductive network in the negative electrode does not break when expansion and contraction occur in the negative electrode active material layer. Preferably, the SWCNT is mixed with at least one of the silicon-based active material (A), carbon-based active material (B), and carbon-based active material (C) in a state of being dispersed in a solvent in advance, the SWCNT is attached to a surface of the at least one active material, and the SWCNT having larger diameter and length is arranged between at least two of the silicon-based active material (A), carbon-based active material (B), and carbon-based active material (C). Furthermore, to support the conductivity in the negative electrode active material layer, carbon black may be used in combination, separately from the SWCNT.

In the case of using a CNT as the conductive assistant, the content of CNT is preferably 0.01% by mass or more and 1% by mass or less, particularly preferably 0.03% by mass or more and 0.8% by mass or less, and further preferably 0.1% by mass or more and 0.5% by mass or less, with respect to the total solid content of the negative electrode active material layer.

In addition, an electrode additive generally used for electrode formation, such as a thickener, dispersant, or stabilizer, can be appropriately used in the negative electrode active material layer.

The negative electrode active material of an embodiment is able to form a high-density negative electrode active material layer by having an unbiased distribution of fine powder, and local bias of expansion and contraction of the negative electrode active material layer does not occur. Hence, the nonaqueous electrolyte secondary battery can be improved in cycle characteristics.

Another embodiment of the present invention provides a nonaqueous electrolyte secondary battery that includes at least a negative electrode for a nonaqueous electrolyte secondary battery of one embodiment, a positive electrode for a nonaqueous electrolyte secondary battery, a separator, and a nonaqueous electrolyte.

The nonaqueous electrolyte secondary battery of an embodiment includes, as constituent members thereof, at least a negative electrode for a nonaqueous electrolyte secondary battery, a positive electrode for a nonaqueous electrolyte secondary battery, a separator, and a nonaqueous electrolyte.

In an embodiment, the positive electrode refers to a battery member of a thin plate shape or sheet shape in which a mixture including a positive electrode active material is applied or rolled and dried on a positive electrode current collector being a metal foil such as aluminum foil and a positive electrode active material layer is formed. That is, the positive electrode is composed of the positive electrode current collector, and the positive electrode active material layer including the positive electrode active material applied on both or either side of the positive electrode current collector. In an embodiment, the positive electrode active material layer preferably includes a positive electrode active material and a binder. The positive electrode active material refers to a substance used in the positive electrode among substances involved in reactions that generate electrical energy. The binder generally refers to a substance for binding positive electrode active material particles in order to bring positive electrode active materials in particle form into electrical contact with each other.

The positive electrode active material used in an embodiment preferably includes a lithium-nickel-based composite oxide as the positive electrode active material. The lithium-nickel-based composite oxide refers to a transition metal composite oxide containing lithium and nickel, represented by general formula $Li_xNi_yMe_{(1-y)}O_2$ (where Me is at least one or more metals selected from the group consisting of Al, Mn, Na, Fe, Co, Cr, Cu, Zn, Ca, K, Mg, and Pb). The positive electrode active material particularly preferably includes a lithium-manganese-based composite oxide. Examples of the lithium-manganese-based composite oxide include lithium manganate ($LiMnO_2$) having a zigzag layered structure and spinel type lithium manganate ($LiMn_2O_4$). The positive electrode active material particularly includes a lithium nickel manganese cobalt composite oxide having a layered crystal structure represented by general formula $Li_xNi_yCo_zMn_{(1-y-z)}O_2$. Here, x in the general formula satisfies $1 \leq x \leq 1.2$, y and z are positive numbers satisfying $y+z<1$, and the value of y is 0.5 or more. When the proportion of manganese increases, it becomes less likely to synthesize a single-phase composite oxide. Hence, it is desirable that $1-y-z \leq 0.4$. To obtain a high-capacity battery, it is particularly preferable that $y>1-y-z$ and $y>z$. The lithium-nickel-based composite oxide having this general formula is a lithium nickel cobalt manganese composite oxide (hereinafter sometimes referred to as "NCM"). NCM is a lithium-nickel-based composite oxide suitably used for increasing battery capacity.

Examples of the binder that forms the positive electrode active material layer together with the positive electrode active material include: a fluorine resin, such as polyvinylidene fluoride (PVDF), polytetrafluoroethylene (PTFE), and polyvinyl fluoride (PVF); a conductive polymer, such as polyanilines, polythiophenes, polyacetylenes, and polypyrroles; synthetic rubber, such as styrene butadiene rubber (SBR), butadiene rubber (BR), chloroprene rubber (CR), isoprene rubber (IR), and acrylonitrile butadiene rubber (NBR); and polysaccharides, such as carboxymethyl cellulose (CMC), xanthan gum, guar gum, and pectin.

The positive electrode active material layer may also include a conductive assistant in some cases. Examples of the conductive assistant that may be used in some cases include: carbon fiber, such as carbon nanofiber; carbon black, such as acetylene black and Ketjen black; and a carbon material, such as activated carbon, graphite, mesoporous carbon, fullerenes, and a carbon nanotube. In an embodiment, it is particularly preferable to use a carbon nanotube (CNT) as the conductive assistant. A CNT is a substance in which a six-membered ring network (graphene) of carbon atoms has a single-layer or multilayer coaxial tube structure. There are single-walled carbon nanotubes (single-layer; SWCNTs) and multi-walled carbon nanotubes (multilayer; MWCNTs). Either CNT may be used. However, it is preferable to use a bundled SWCNT in which SWCNTs are aggregated and which has a shape having larger diameter and length than a single SWCNT, so that a conductive network in the positive electrode does not break when expansion and contraction occur in the positive electrode active material layer. Furthermore, to support the conductivity in the positive electrode active material layer, carbon black may be used in combination, separately from the SWCNT. In addition, an electrode additive generally used for electrode formation, such as a thickener, dispersant, or stabilizer, can be appropriately used in the positive electrode active material layer.

The nonaqueous electrolyte secondary battery of an embodiment includes a separator as a constituent member. For the separator, for example, a polyolefin film can be used. Polyolefin is a compound obtained by polymerizing or copolymerizing $\alpha$-olefins such as ethylene, propylene, butene, pentene, and hexane. Examples thereof include polyethylene, polypropylene, polybutene, polypentene, polyhexene, and a copolymer thereof. In the case of using a polyolefin film as the separator, it is favorable that the polyolefin film has a structure having pores that are closed when the battery temperature rises. That is, it is favorable that the polyolefin film is a porous or microporous polyolefin film. By the polyolefin film having such a structure, even if the battery temperature rises, the separator can be closed (shut down) and ion flow can be cut off. That is, during heating of the battery, a uniaxially stretched polyolefin film shrinks and has its pores closed, thereby making it possible to prevent short circuits between positive and negative electrodes. In order to exhibit the shutdown effect, it is very preferable to use a porous polyethylene film.

A crosslinked film can be used as the separator. Since the porous or microporous polyolefin film has a property in which it shrinks during heating, when the battery overheats, the film shrinks and shuts down. However, if the film has an excessively large thermal shrinkage rate, the area of the film may greatly change, which may instead end up causing large current flow. Since a crosslinked polyolefin film has a suitable thermal shrinkage rate, even if overheating occurs, the crosslinked polyolefin film is able to shrink enough to make the pores closed, without greatly changing its area.

The separator used in an embodiment may have a heat-resistant fine particle layer on either or both sides of the separator. On this occasion, the heat-resistant fine particle layer provided to prevent overheating of the battery includes inorganic fine particles that have heat resistance with a heat resistance temperature of 150 °C or higher and are stable with respect to electrochemical reactions. Examples of such inorganic fine particles include: an inorganic oxide, such as silica, alumina ($\alpha$-alumina, $\beta$-alumina, and $\theta$-alumina), iron oxide, titanium oxide, barium titanate, zirconium oxide; and a mineral, such as boehmite, zeolite, apatite, kaolin, spinel, mica, and mullite.

The nonaqueous electrolyte secondary battery of an embodiment includes a nonaqueous electrolyte. The nonaqueous electrolyte is an electrically conductive substance in which an ionic substance is dissolved in an organic solvent. The above negative electrode for a nonaqueous electrolyte secondary battery and positive electrode for a nonaqueous electrolyte secondary battery are superimposed, and the separator is arranged therebetween. A nonaqueous electrolyte secondary battery element including this and the nonaqueous electrolyte is one unit of the main constituent members of the nonaqueous electrolyte secondary battery. In general, a laminate obtained by superimposing multiple negative electrodes for a nonaqueous electrolyte secondary battery and multiple positive electrodes for a nonaqueous electrolyte secondary battery via multiple separators is immersed in the nonaqueous electrolyte. The nonaqueous electrolyte that can be used in an embodiment is mainly a nonaqueous electrolytic solution, and is preferably a mixture containing: a chain carbonate, such as dimethyl carbonate (DMC), diethyl carbonate (DEC), ethyl methyl carbonate (EMC), di-n-propyl carbonate, di-t-propyl carbonate, di-n-butyl carbonate, di-isobutyl carbonate, or di-t-butyl carbonate; and a cyclic carbonate, such as propylene carbonate (PC) or ethylene carbonate (EC). The nonaqueous electrolytic solution is obtained by dissolving a lithium salt such as lithium hexafluorophosphate ($LiPF_6$), lithium borofluoride ($LiBF_4$), LiFSI, or lithium perchlorate ($LiClO_4$) in such a carbonate mixture.

In addition, the nonaqueous electrolytic solution may contain, as an additive, a cyclic carbonate compound different from the above cyclic carbonate. Examples of the cyclic carbonate that may be used as the additive include vinylene carbonate (VC). A cyclic carbonate compound having halogen may be used as the additive. These cyclic carbonates are also compounds that form a protective film on the negative electrode for a nonaqueous electrolyte secondary battery and the positive electrode for a nonaqueous electrolyte secondary battery during a charge and discharge process of the nonaqueous electrolyte secondary battery. Particularly, these cyclic carbonates are compounds that can protect the positive electrode active material containing a lithium-nickel-based composite oxide from attack from a sulfur-containing compound such as the above disulfonic acid compound or disulfonic acid ester compound. Examples of the cyclic carbonate compound having halogen include fluoroethylene carbonate (FEC), difluoroethylene carbonate, trifluoroethylene carbonate, chloroethylene carbonate, dichloroethylene carbonate, and trichloroethylene carbonate. Fluoroethylene carbonate, which is a cyclic carbonate compound having halogen and having an unsaturated bond, is particularly preferably used.

The nonaqueous electrolytic solution may further contain a disulfonic acid compound as an additive. The disulfonic acid compound refers to a compound having two sulfo groups in one molecule, and includes a disulfonic acid salt compound in which sulfo groups form a salt together with metal ions, or a disulfonic acid ester compound in which sulfo groups form an ester. One or two of the sulfo groups of the disulfonic acid compound may form a salt together with metal ions or may be in an anionic state. Examples of the disulfonic acid compound include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, and a salt thereof (such as lithium methanedisulfonate and lithium 1,2-ethanedisulfonate), as well as anions thereof (such as methanedisulfonic acid anions and 1,2-ethanedisulfonic acid anions). Examples of the disulfonic acid compound also include a disulfonic acid ester compound, and the following may be used: a chain disulfonic acid ester, such as an alkyl diester or aryl diester of methanedisulfonic acid, 1,2-ethanedisulfonic acid, 1,3-propanedisulfonic acid, 1,4-butanedisulfonic acid, benzenedisulfonic acid, naphthalenedisulfonic acid, or biphenyldisulfonic acid; and a cyclic disulfonic acid ester, such as methylene methanedisulfonic acid ester, ethylene methanedisulfonic acid ester, and propylene methanedisulfonic acid ester.

The nonaqueous electrolyte secondary battery of an embodiment is generally sealed with an exterior body. The term "seal" means that at least a portion of the nonaqueous electrolyte secondary battery element is wrapped with an exterior body material so as not to contact the outside air. The exterior body of the nonaqueous electrolyte secondary battery has gas barrier properties, and is either a housing capable of sealing the nonaqueous electrolyte secondary battery element, or is of a bag shape composed of a flexible material. For the exterior body, an aluminum can, an aluminum laminate sheet in which aluminum foil and polypropylene or the like are laminated, or the like can be suitably used. That is, any material that prevents the nonaqueous electrolyte from leaching to the outside may be used for the exterior body. In the outermost layer of the exterior body, a laminate film having a heat-resistant protective layer such as polyester, polyamide, or liquid crystalline polymer can be used; in the innermost layer, a laminate film having a sealant layer composed of thermoplastic resin including polyethylene, polypropylene, ionomer, acid-modified polyethylene such as maleic acid-modified polyethylene, acid-modified polypropylene such as maleic acid-modified polypropylene, polyethylene terephthalate (PET), polyethylene naphthalate (PEN), polyethylene isophthalate (PEI), a blend of PET and PEN, a blend of PET and PEI, polyamide resin, a blend of polyamide resin and PET, a blend of xylylene group-containing polyamide and PET, or the like can be used. The exterior body may be formed using one obtained by bonding or welding one or more of these laminate films in combination and further multilayering the same. Aluminum, tin, copper, nickel, or stainless steel can be used as a metal layer having gas barrier properties. The metal layer has a thickness of preferably 30 to 50 $\mu$m. Particularly suitably, an aluminum laminate, which is a laminate of aluminum foil and a polymer such as polyethylene or polypropylene, can be used.

The nonaqueous electrolyte secondary battery of an embodiment may be in various forms such as a coin type battery, a laminated battery, and a wound type battery.

Examples

The embodiments of the present invention have been described above. Examples of the present invention will be described below. Both the above embodiments and the examples described below are merely illustrative descriptions of the present invention, and are not intended to limit the technical scope of the present invention to the configurations of specific embodiments or specific examples.

(Preparation of Positive Electrode, All Examples and Comparative Examples)

Li(Ni$_{0.9}$Co$_{0.05}$Mn$_{0.05}$)O$_2$ (97.5% by mass) as a positive electrode active material, polyvinylidene fluoride (PVDF, 1.5% by mass) as a positive electrode binder, and a carbon nanotube (multi-walled carbon nanotube (MWCNT, 1% by mass)) as a conductive assistant were mixed to form a positive electrode active material mixture. By dispersing the positive electrode active material mixture in N-methyl-2-pyrrolidone, a positive electrode slurry was prepared. This positive electrode slurry was uniformly applied to one side of an aluminum current collector having a thickness of 12 $\mu$m. The thickness of the coating film was adjusted so that the initial charge capacity per unit area became 4.0 mAh/cm$^2$. After drying, compression molding was performed using a roll press, and the density of the positive electrode active material layer was adjusted to 3.5 g/cm$^3$, thereby preparing a positive electrode.

(Preparation of Negative Electrode, Example 1)

As a negative electrode active material, SiO$_x$ (x=1.0, D$_{10}$=11.0 $\mu$m, D$_{90}$=19.2 $\mu$m) being the silicon-based active material (A), artificial graphite (D$_{10}$=7.9 $\mu$m, D$_{90}$=21.4 $\mu$m) being the carbon-based active material (B) composed of secondary particles formed by aggregation of primary particles, and artificial graphite (D$_{10}$=4.8 $\mu$m, D$_{90}$=17.5 $\mu$m) being the carbon-based active material (C) composed of primary particles that do not aggregate with each other and do not form secondary particles, were used. A negative electrode active material mixture was obtained in which a negative electrode active material mass ratio (mass ratio of SiO$_x$ of the silicon-based active material (A) to artificial graphite of the carbon-based active materials (B) and (C) of the negative electrode (expressed as (A)/[(B)+(C)] in the table)) is 85/15, and a mass ratio of the carbon-based active material (B) to the carbon-based active material (C) is 1/1. This active material mixture (96.6% by mass), a polyacrylic acid-based binder (trade name: 10 CLPAH, Fujifilm Wako Pure Chemical Corporation, 3.0% by mass) as a negative electrode, a single-walled carbon nanotube (SWCNT, 0.3% by mass) as a conductive assistant, and carboxymethyl cellulose (CMC, 0.1% by mass) were dissolved and dispersed in an aqueous solvent to prepare a negative electrode slurry. This negative electrode slurry was uniformly applied onto a Cu current collector having a thickness of 8 $\mu$m. The thickness of the coating film was adjusted so that the initial charge capacity per unit area became 4.3 mAh/cm$^2$. Thereafter, compression molding was performed using a roll press, and the density of the negative electrode active material layer was adjusted to 1.65 g/cm$^3$, thereby preparing a negative electrode.

SiO$_x$ used in the examples can be suitably obtained from, for example, Sigma-Aldrich, High Purity Chemicals Laboratory Co., Ltd., Kanto Chemical Co., Inc., and Fujifilm Wako Pure Chemical Corporation. A surface state such as surface coating component or roughness, particle size and the like can be adjusted by using the above alone or in mixture and employing a known method such as heat treatment such as firing, chemical treatment such as CVD, mechanical treatment such as pulverization and classification, and sputtering. Graphite can be suitably obtained from Nippon Graphite Industries, Co., Ltd., Resonac Corporation, or the like. A surface state such as surface coating component or roughness, particle size and the like can be adjusted by using the above alone or in mixture and employing a known method such as heat treatment such as firing, chemical treatment such as CVD, mechanical treatment such as pulverization and classification, and sputtering.

The conductive assistant used here was a bundled SWCNT in which SWCNTs are aggregated and which has a shape having larger diameter and length than a single SWCNT. Multiple conductive assistants are arranged on the surface of the negative electrode active material so as to contact any two or more types of negative electrode active materials among the silicon-based active material (A), carbon-based active material (B), and carbon-based active material (C). Such an SWCNT can be obtained from, for example, Meijo Nano Carbon Co., Ltd., Honjo Chemical Corporation, and Kusumoto Chemicals, Ltd.

In other examples and comparative examples, the type of the negative electrode active material used and the blending amount of the negative electrode active material were changed as shown in Table 1. The sources of the silicon-based active material (A) $SiO_x$, the carbon-based active materials (B) and (C), and the conductive assistant, respectively, were the same as those in Example 1. The mass ratio between the carbon-based active material (B) to the carbon-based active material (C) was set to 7:3 for Example 6, and was set to 1:1 for the other examples and comparative examples, as in Example 1. The method for preparing the negative electrode active material layer was the same as that in Example 1 for all examples and comparative examples. In the table, "%" represents a ratio of the negative electrode active material to a total mass of the solid content.

(Fabrication of Lithium Ion Secondary Battery, All Examples and Comparative Examples)

A positive electrode and negative electrode cut to 3 cm × 3 cm were arranged to face each other with a separator interposed therebetween. As the separator, a 10 μm thick microporous polyethylene film with ceramic coating on both sides was used.

A nonaqueous electrolytic solution was prepared by mixing an organic solvent and a supporting salt. The nonaqueous electrolytic solution used was a mixture in which cyclic carbonate (EC) and chain carbonate (DEC, EMC) were adjusted to have a volume ratio of 1/6, and lithium hexafluorophosphate ($LiPF_6$) and fluoroethylene carbonate (FEC) were further added as the supporting salt.

The above positive electrode, negative electrode, separator, and nonaqueous electrolytic solution were arranged in a laminated exterior body, and the laminate was sealed to fabricate a lithium ion secondary battery which is a nonaqueous electrolyte secondary battery. The positive electrode and negative electrode had tabs connected and were in a state of being electrically connected from the outside of the laminate.

(Evaluation of Lithium Ion Secondary Battery)

With respect to the lithium ion secondary batteries fabricated in each example and comparative example, the capacity retention rate and the decrease in average voltage during 1C discharge were measured and evaluated by the following methods.

(Energy Density)

A fabricated battery was charged at 7.2 mA, and, after an upper limit voltage reached 4.2 V, was charged at constant voltage until a total charging time reached 12 hours. Thereafter, the battery was discharged at constant current of 7.2 mA until a lower limit voltage reached 2.5 V. After being charged again under the same conditions, the battery was left to stand in a constant temperature bath at 45 °C for 3 days, then discharged again under the same conditions, and further underwent charge and discharge once more. The capacity and average voltage during the final discharge were evaluated. After completion of this evaluation, the thickness of the laminated battery (hereinafter sometimes simply referred to as "cell") was evaluated.

From the cell thickness, the sum of thicknesses of unit components of the laminated battery, including the thickness of the positive electrode active material layer, half the thickness of the positive electrode current collector, the thickness of the separator, the thickness of the negative electrode active material layer, and half the thickness of the negative electrode current collector, was determined. Specifically, the thickness of the laminate, half the thickness of the positive electrode current collector, and half the thickness of the negative electrode current collector were subtracted from the cell thickness.

From the following calculation formula, the energy density of the portion of the unit components of the laminated battery was determined:

(Capacity during cell discharge) × (average voltage during cell discharge) / (electrode area) / (thickness of positive electrode active material layer + half thickness of positive electrode current collector + thickness of separator + thickness of negative electrode active material layer + half thickness of negative electrode current collector)     [Formula 1]

(Capacity Retention Rate)

The fabricated battery was arranged in a constant temperature bath at 45 °C, charged at 30 mA, and, after the upper limit voltage reached 4.2 V, charged at constant voltage until the total charging time reached 2.5 hours. Thereafter, the battery was discharged at constant current of 30 mA until the lower limit voltage reached 2.5 V. This charge and discharge cycle was repeated 100 times, and a ratio of the discharge capacity at the 100th cycle to the discharge capacity at the 1st cycle was taken as a capacity retention rate after 300 cycles.

The following table shows the results of comparative examples and examples.

[Table 1]

| Table 1: Blending of Negative Electrode Active Material | | | | | | | | | |
|---|---|---|---|---|---|---|---|---|---|
| | Silicon-based active material (A) | | Carbon-based active material (B) | | Carbon-based active material (C) | | $D10_{max}/$ $D10_{min}$ | $D90_{max}/$ $D90_{min}$ | Negative electrode active material mass ratio (A)/[(B)+(C)] |
| | $D10_A$ [μm] | $D90_A$ [μm] | $D10_B$ [μm] | $D90_B$ [μm] | $D10_C$ [μm] | $D90_C$ [μm] | | | |
| Example 1 | 11.0 | 19.2 | 7.9 | 21.4 | 4.8 | 17.5 | 1.65 | 1.22 | 15:85 |
| Example 2 | 8.2 | 13.3 | 7.9 | 21.4 | 4.8 | 17.5 | 1.84 | 1.61 | 15:85 |
| Example 3 | 13.1 | 20.0 | 7.9 | 21.4 | 4.8 | 17.5 | 1.65 | 1.22 | 15:85 |
| Example 4 | 7.0 | 14.0 | 7.9 | 21.4 | 4.8 | 17.5 | 2.32 | 1.53 | 15:85 |
| Example 5 | 11.0 | 19.2 | 7.9 | 21.4 | 6.2 | 17.5 | 1.36 | 1.55 | 15:85 |
| Example 6 | 13.1 | 20.0 | 6.1 | 19.9 | 7.0 | 29.8 | 1.00 | 1.11 | 15:85 |
| Example 7 | 7.0 | 14.0 | 7.9 | 21.4 | 4.8 | 22.0 | 2.32 | 1.57 | 15:85 |
| Example 8 | 11.0 | 19.2 | 7.9 | 21.4 | 4.8 | 17.5 | 1.65 | 1.22 | 10:90 |
| Example 9 | 11.0 | 19.2 | 7.9 | 21.4 | 4.8 | 17.5 | 1.65 | 1.22 | 20:80 |
| Example 10 | 11.0 | 19.2 | 8.8 | 23.7 | 4.8 | 17.5 | 1.83 | 1.35 | 15:85 |
| Example 11 | 5.9 | 11.3 | 7.9 | 21.4 | 7.0 | 22.0 | 2.26 | 1.95 | 15:85 |
| Example 12 | 11.0 | 19.2 | 12.0 | 38.2 | 7.0 | 22.0 | 2.07 | 1.99 | 15:85 |
| Comparative Example 1 | 8.2 | 13.3 | 12.0 | 38.2 | 7.0 | 22.0 | 2.79 | 5.12 | 15:85 |
| Comparative Example 2 | 5.4 | 7.9 | 7.9 | 21.4 | 4.8 | 17.5 | 4.39 | 2.71 | 15:85 |
| Comparative Example 3 | 5.4 | 7.9 | 6.1 | 19.9 | 4.8 | 17.5 | 2.03 | 2.52 | 15:85 |

[Table 2]

| Table 2: Battery Performance Evaluation | | |
|---|---|---|
| | Capacity retention rate after 300 cycles [%] | Energy density [Wh/L] |
| Example 1 | 95.7 | 767 |
| Example 2 | 95.4 | 758 |
| Example 3 | 95.6 | 760 |
| Example 4 | 94.1 | 750 |
| Example 5 | 95.6 | 762 |
| Example 6 | 95.3 | 755 |
| Example 7 | 93.5 | 749 |
| Example 8 | 96.0 | 730 |
| Example 9 | 93.2 | 782 |

(continued)

| Table 2: Battery Performance Evaluation | | |
|---|---|---|
| | Capacity retention rate after 300 cycles [%] | Energy density [Wh/L] |
| Example 10 | 94.0 | 752 |
| Example 11 | 91.9 | 745 |
| Example 12 | 83.0 | 750 |
| Comparative Example 1 | 84.8 | 750 |
| Comparative Example 2 | Sudden deterioration | - |
| Comparative Example 3 | Sudden deterioration | - |

The nonaqueous electrolyte secondary battery using the negative electrode for a nonaqueous electrolyte secondary battery of the examples of the present invention had high energy density and also a high capacity retention rate after charge and discharge. On the other hand, the nonaqueous electrolyte secondary battery using the negative electrode for a nonaqueous electrolyte secondary battery of the comparative examples showed a decrease in either energy density or capacity retention rate, and was unable to be improved in both energy density and lifespan. By optimizing a blending ratio of the silicon-based active material and graphite-based active material, removing fine particles of SiO and two types of graphite, and optimizing the cumulative particle size distribution D10, suitable particle packing density of the negative electrode active material layer can be obtained. By suppressing electrode expansion, the energy density and cycle capacity retention rate of the nonaqueous electrolyte secondary battery can be improved. Furthermore, it is more effective to set a ratio of $D_{max}$ to $D90_{min}$ of D90, which is $D_{max}/D90_{min}$ of D90, to 2 or less.

Although the negative electrode for a nonaqueous electrolyte secondary battery of the present invention has been described in detail above, the present invention is not limited to the above embodiments and the above examples, and it goes without saying that various improvements and modifications may be made within the scope that does not depart from the gist of the present invention.

**Claims**

1. A negative electrode for a nonaqueous electrolyte secondary battery, in which

    the negative electrode comprises a negative electrode active material layer including a negative electrode active material, a binder, and a conductive assistant,
    the negative electrode active material is **characterized by** including:

        a silicon-based active material (A), containing $SiO_x$ (where x is a number satisfying $0.5 \leq x \leq 1.6$);
        a carbon-based active material (B), composed of secondary particles formed by aggregation of primary particles; and
        a carbon-based active material (C), composed of primary particles that do not form secondary particles,

    in a volume-based cumulative particle size distribution of particles of the negative electrode active material, in a case where a particle size when a cumulative particle volume from a small particle size side reaches x [%] of a total particle volume is expressed as Dx [$\mu$m],
    $D10_A$ of the silicon-based active material (A) is 3 $\mu$m or more;
    among values of $D10_A$ of the silicon-based active material (A), $D10_B$ of the carbon-based active material (B), and $D10_C$ of the carbon-based active material (C), when a maximum value of D10 is defined as $D10_{max}$ and a minimum value of D10 is defined as $D10_{min}$, a value of $D10_{max}/D10_{min}$ is 2.5 or less; and
    among values of $D90_A$ of the silicon-based active material (A), $D90_B$ of the carbon-based active material (B), and $D90_C$ of the carbon-based active material (C), when a maximum value of D90 is defined as $D90_{max}$ and a minimum value of D90 is defined as $D90_{min}$, a value of $D90_{max}/D90_{min}$ is 2.0 or less.

2. The negative electrode for a nonaqueous electrolyte secondary battery according to claim 1, wherein $D50_A$ of the silicon-based active material (A) is 7 $\mu$m or more and 13 $\mu$m.

3. The negative electrode for a nonaqueous electrolyte secondary battery according to claim 1 or 2, wherein

the carbon-based active material (B) and the carbon-based active material (C) contain artificial graphite, hard carbon, soft carbon, or any mixture thereof.

4. The negative electrode for a nonaqueous electrolyte secondary battery according to any one of claims 1 to 3, wherein the carbon-based active material (B) is artificial graphite whose surface is coated with amorphous carbon, and the carbon-based active material (C) is artificial graphite whose surface is not coated.

5. The negative electrode for a nonaqueous electrolyte secondary battery according to any one of claims 1 to 4, wherein a content of the silicon-based active material is 10% by mass or more and 20% by mass or less with respect to a total amount of the silicon-based active material (A), the carbon-based active material (B), and the carbon-based active material (C) in the negative electrode.

6. The negative electrode for a nonaqueous electrolyte secondary battery according to any one of claims 1 to 5, wherein the conductive assistant includes a carbon nanotube.

7. The negative electrode for a nonaqueous electrolyte secondary battery according to any one of claims 1 to 6, wherein the conductive assistant is an aggregated single-walled carbon nanotube in which single-walled carbon nanotubes are aggregated.

8. The negative electrode for a nonaqueous electrolyte secondary battery according to any one of claims 1 to 7, wherein a portion of the conductive assistant exists in a state of being previously attached to a surface of at least one of the silicon-based active material (A), the carbon-based active material (B), and the carbon-based active material (C).

9. The negative electrode for a nonaqueous electrolyte secondary battery according to any one of claims 1 to 8, wherein the binder includes polyacrylic acid.

10. A nonaqueous electrolyte secondary battery, comprising at least the negative electrode for a nonaqueous electrolyte secondary battery according to any one of claims 1 to 9, a positive electrode for a nonaqueous electrolyte secondary battery, a separator, and an electrolyte.

## INTERNATIONAL SEARCH REPORT

| International application No. |
| --- |
| **PCT/JP2023/044966** |

| A. | CLASSIFICATION OF SUBJECT MATTER |
| --- | --- |

*H01M 4/36*(2006.01)i; *H01M 4/13*(2010.01)i; *H01M 4/48*(2010.01)i; *H01M 4/62*(2006.01)i; *H01M 4/587*(2010.01)i
FI:  H01M4/36 E; H01M4/48; H01M4/587; H01M4/36 B; H01M4/36 C; H01M4/62 Z; H01M4/13

According to International Patent Classification (IPC) or to both national classification and IPC

| B. | FIELDS SEARCHED |
| --- | --- |

Minimum documentation searched (classification system followed by classification symbols)

H01M4/36; H01M4/13; H01M4/48; H01M4/62; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2023-503706 A (CONTEMPORARY AMPEREX TECHNOLOGY CO., LTD.) 31 January 2023 (2023-01-31)<br>paragraphs [0001], [0028]-[0033], [0135]-[0137], [0144], [0149], [0169]-[0187] | 1-6, 8-10 |
| Y | paragraphs [0001], [0028]-[0033], [0135]-[0137], [0144], [0149], [0169]-[0187] | 7 |
| Y | WO 2021/085255 A1 (MURATA MANUFACTURING CO., LTD.) 06 May 2021 (2021-05-06)<br>paragraph [0044], fig. 4 | 7 |
| Y | JP 2022-529987 A (LG ENERGY SOLUTION LTD.) 27 June 2022 (2022-06-27)<br>paragraph [0010] | 7 |
| A | WO 2015/045314 A1 (SANYO ELECTRIC CO., LTD.) 02 April 2015 (2015-04-02)<br>paragraph [0031] | 1-10 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 693 461 A1

**INTERNATIONAL SEARCH REPORT**
Information on patent family members

International application No.

**PCT/JP2023/044966**

| Patent document cited in search report | | | Publication date (day/month/year) | Patent family member(s) | | | Publication date (day/month/year) |
|---|---|---|---|---|---|---|---|
| JP | 2023-503706 | A | 31 January 2023 | US | 2022/0367872 | A1 | |
| | | | | paragraphs [0002], [0033]-[0039], [0178]-[0180], [0189], [0195], [0215]-[0239] | | | |
| | | | | EP | 4075542 | A1 | |
| | | | | KR | 10-2022-0110862 | A | |
| | | | | CN | 115917780 | A | |
| | | | | WO | 2022/140902 | A1 | |
| WO | 2021/085255 | A1 | 06 May 2021 | US | 2022/0246979 | A1 | |
| | | | | paragraph [0061], fig. 4 | | | |
| | | | | CN | 114641871 | A | |
| JP | 2022-529987 | A | 27 June 2022 | US | 2022/0320518 | A1 | |
| | | | | paragraph [0013] | | | |
| | | | | WO | 2021/066554 | A1 | |
| | | | | EP | 3951953 | A1 | |
| | | | | KR | 10-2021-0040801 | A | |
| | | | | CN | 113785422 | A | |
| WO | 2015/045314 | A1 | 02 April 2015 | US | 2016/0204430 | A1 | |
| | | | | paragraph [0032] | | | |
| | | | | CN | 105493330 | A | |

Form PCT/ISA/210 (patent family annex) (July 2022)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018097212 A